Europäisches Patentamt

**European Patent Office**

Office européen des brevets

(19)

(11) Veröffentlichungsnummer: **0 168 347**

A1

(12) # EUROPÄISCHE PATENTANMELDUNG

(21) Anmeldenummer: **85810284.1**

(22) Anmeldetag: **20.06.85**

(51) Int. Cl.⁴: **A 01 N 59/02**
//(A01N59/02, 43:16, 35:02, 31:02)

(30) Priorität: **25.06.84 CH 3059/84**

(43) Veröffentlichungstag der Anmeldung:
**15.01.86 Patentblatt 86/3**

(84) Benannte Vertragsstaaten:
**AT CH DE FR IT LI SE**

(71) Anmelder: **Tilco Biochemie GmbH**
**Kupferstrasse 36**
**D-7000 Stuttgart 80(DE)**

(72) Erfinder: **Gradl, Anton, Dr.**
**Weisholz 3**
**D-8441 Rattenberg(DE)**

(74) Vertreter: **Becher, Pauline, Dr. et al,**
**A. Braun, Braun, Héritier, Eschmann AG Holbeinstrasse**
**36-38**
**CH-4051 Basel(CH)**

(54) Grusförmiges Mittel zum Schutz von Pflanzen gegen gasförmiges Schwefeldioxid.

(57) Das grusförmige Mitel zum Schutz von Pflanzen gegen gasförmiges Schwefeldioxid enthält
a) Schwefeldioxid in an mindestens ein staubförmiges Adsorbens gebundener und für die Pflanze unschädlicher Form,
b) mindestens einen Wirkstoff, der aus Zuckern, Zuckersäuren und deren Salzen sowie Zuckeralkoholen gewählt ist,
c) mindestens einen Kleber, der aus pflanzlichen Schleimen und Gummen gewählt ist,
d) mindestens ein staubförmiges Adsorbens, das aus silikatischen Materialien gewählt ist, und
e) gegebenenfalls mindestens einen Lösungsvermittler.
Das Mittel kann auf das Substrat, auf dem die Pflanzen wachsen, aufgebracht werden.

Grusförmiges Mittel zum Schutz von Pflanzen gegen gasförmiges Schwefeldioxid

Es ist bekannt, dass bei Pflanzen eine Resistenz gegen Schadstoffe induziert werden kann. Es handelt sich dabei um einen ähnlichen Mechanismus wie das Immunsystem beim Säuger [G. Loebenstein, Ann. Rev. Phytopathol. 10, 177-206 (1972): "Localization and induced resistence in virus infected plants"; J.M. Daly, "Some aspects of hostpathogen interactions" in R. Heitefuss und P.H. Williams (Herausgeber), "Physiological plant pathology", Encyclop. of Plant Physiology, New Series, Band 4, 27-50 (1978)]. Ob dabei die Erzeugung der relativ unspezifischen Phytoalexine [E.I. Hecht und D.F. Bateman, Phytopathology 54, 523-530 (1964): "Nonspecific acquired resistance to pathogenous results from localized infection by Thielaviopsis basicola or virus in tobacco leaves"; J.A. Kuć: "Phyto-alexins" in R. Heitefuss and P.H. Williams (Herausgeber), "Physiological plant pathology", Encyclop. of Plant Physiology, New Series, Band 4, 632-652 (1978)] der einzige Vorgang ist, erscheint heute unklar. Es werden auch spezifische Elicitoren (entsprechend dem Antigen im Immunsystem) diskutiert [N.T. Keen, Science 187, 74-75 (1975): Specific elicitors of plant phytoalexin production: Determinants of race specificity in pathogens] diskutiert.

Durch geringe Mengen an Schadstoffen werden mehr oder weniger spezifische Abwehrmechanismen gegen diese Schadstoffe erzeugt. Häufig ist es schwierig, diese Reaktion auszulösen. Ein wichtiges Hilfsmittel für diesen Zweck sind die verwendeten Adjuvantien (Hilfsstoffe).

Im vorliegenden Fall wird mit geringen Mengen an Schwefeldioxid ($SO_2$), das in gebundener und für die Pflanze unschädlicher Form vorliegt, ein Schutzeffekt erzielt. Es wurde nämlich gefunden, dass das Schwefeldioxid an mindestens ein staubförmiges Adsorbens, das aus silikatischen Materialien, wie Diabasmehl, Phonolithmehl oder vorzugsweise Talkumpulver, gewählt ist, gebunden werden kann und dann für die Pflanze unschädlich ist. Das erfindungsgemässe Mittel enthält ferner mindestens einen Wirkstoff, der aus Zuckern, wie D-Mannose, D-Galactose, L-Sorbose, L-Arabinose und D-Xylose, Zuckersäuren und deren Salzen, wie Glucuronsäure und deren Salzen sowie Galacturonsäure und deren Salzen, und Zuckeralkoholen, wie D-Mannit und Sorbit, gewählt ist. Vorzugsweise enthält das Mittel D-Galactose, D-Xylose und D-Mannit einzeln oder im Gemisch miteinander als Wirkstoffe. Das staubförmige Gemisch aus Schwefeldioxid, Wirkstoff(en) und Adsorbens ist mit mindestens einem Kleber, der aus pflanzlichen Schleimen und Gummen, wie Gummiarabikum, Pektin, Tragant und vorzugsweise Algine, gewählt ist, zu Grus granuliert, damit das Mittel auch aus der Luft gut aufgebracht werden kann. Der Komplex Adsorbens-Kleber ist das Adjuvans. Vorzugsweise wird auch ein Lösungsvermittler für den Kleber zugesetzt, der ein Auflösen des Grus-Korns auf dem Boden ermöglicht. Im Falle von Alginen eignet sich Bittersalz (Magnesiumsulfatheptahydrat) als Lösungsvermittler.

Das erfindungsgemässe Mittel ist, wie gesagt, grusförmig, das heisst, es besteht aus eckigen, sand-

bis feinkiesgrossen Teilchen. Vorzugsweise hat es eine Korngrösse von 0,2 bis 2 mm.

Vorzugsweise enthält das erfindungsgemässe Mittel 0,40 bis 0,47 Gew.%, insbesondere 0,43 Gew.%, Schwefeldioxid, 3,6 bis 5,0 Gew.%, insbesondere 4,0 Gew.%, Wirkstoff(e), 27 bis 31 Gew.%, insbesondere 28 Gew.%, Kleber und 12 bis 16 Gew.%, insbesondere 14 Gew.%, Adsorbens sowie gegebenenfalls 35 bis 40 Gew.%, insbesondere 38 Gew.%, Lösungsvermittler.

Als Quelle von Schwefeldioxid, D-Galactose, D-Xylose und D-Mannit ist Sulfitablauge besonders geeignet. Bekanntlich enthält Sulfitablauge, bezogen auf Trockensubstanz,

bis zu 2,6 Gew.% Schwefeldioxid,

bis zu 17 Gew.% D-Galactose,

bis zu 3 Gew.% D-Xylose und

bis zu 1,2 Gew.% D-Mannit.

Das erfindungsgemässe Mittel kann in Mengen von 200 bis 1000 kg/ha auf das Substrat (den Boden), auf dem die Pflanzen wachsen, aufgebracht werden. Dadurch werden die Pflanzen gegen Schwefeldioxid resistent. Das Mittel eignet sich insbesondere zur Sanierung von Wäldern, die durch Luftschadstoffe geschädigt wurden. Es kann vom Flugzeug oder Hubschrauber aus aufgebracht oder über dem Boden verblasen werden.

Beispiel

Man vermischt
7 Gew. Teile ALGINURE®-Bodengranulat (alkalischer Extrakt aus Laminaria digitata und Ascophyllum nodosum, das ca.70 Gew.% Algine, bezogen auf die Trockensubstanz, enthält; Hersteller ist die Patentinhaberin) als Kleber

13,5 Gew. Teile Bittersalz ($MgSO_4 \cdot 7H_2O$) als Lösungsvermittler

5 Gew. Teile Talkumpulver H 340 (Hersteller H.G. Hauri in D-7805 Bötzingen, BRD) als Adsorbens

2,5 Vol. Teile Sulfitablauge aus Zellstoff-Fabriken (60 Gew.% Trockensubstanz, aus Fichtenholz, mit 0,4 Gew.% gebundenem $SO_2$, 2,8 Gew.% D-Galactose, 0,5 Gew.% D-Xylose und 0,2 Gew.% D-Mannit) als Auslöser und Teiladjuvans.

Die Mischung wird bei 50°C vorsichtig getrocknet und danach zu Grus (Korngrösse 0,2 bis 2 mm) vermahlen.

Versuche

Samen von Senf (Sinapis alba) werden in einem Torfkultursubstrat (TKS 2, Hersteller: Klasmanwerke GmbH, D-4478 Geeste 4, BRD) bei 20°C innerhalb von 10 Tagen bis zum Vierblattstadium herangezogen (jeweils ca. 50 Samen pro Pflanzschale von 60 x 40 cm). Ein Teil der Pflanzschalen enthält Substrat, das mit verschiedenen Mengen des nach dem obigen Beispiel hergestellten Mittels vermischt ist.

Die Pflanzen werden bei 20°C 20 Stunden lang einem wässrigen Nebel ausgesetzt, der verschiedene Mengen Schwefeldioxid enthält. Der Nebel wurde aus einer Lösung erzeugt, die aus verschiedenen Mengen einer 1 gew.-%igen Lösung von $Na_2SO_3$, die mit 50 gew.-%iger $H_2SO_4$ auf pH 5,0 eingestellt wurde, durch Verdünnen mit destilliertem Wasser hergestellt ist. Nach der 20-stündigen Behandlung mit dem Nebel wurde die Anzahl der überlebenden Pflanzen, bezogen auf die Gesamtzahl der behandelten Pflanzen, festgestellt.

| g $Na_2SO_3$ pro Liter Nebel | Gesamtzahl der Pflanzen | Nicht ge- schädigte Pflanzen | g Mittel pro kg Kultur- substrat |
|---|---|---|---|
| 0,09 | 56 | 56 | 0 |
| 0,16 | 54 | 54 | 0 |
| 0,185 | 51 | 40 | 0 |
| 0,212 | 53 | 26 | 0 |
| 0,220 | 53 | 5 | 0 |
| 0,230 | 46 | 4 | 0 |
| 0,900 | 52 | 1 | 0 |
| 0,212 | 59 | 27 | 0 |
| 0,212 | 68 | 66 | 1 |
| 0,212 | 47 | 42 | 5 |
| 0,212 | 61 | 57 | 25 |
| 0,212 | 47 | 46 | 50 |
| 0,212 | 61 | 58 | 100 |
| 0,212 | 46 | 44 | 150 |

Aus diesen Ergebnissen ist ersichtlich, dass die Pflanzen, die in mit dem Mittel nach dem obigen Beispiel behandeltem Substrat gewachsen waren, spezifisch widerstands-

fähiger gegen den schwefeldioxidhaltigen Nebel sind als solche, die in unbehandeltem Substrat gewachsen waren, und dass dieser Effekt unabhängig von der verwendeten Dosis des Mittels ist.

Noch laufende Versuche in geschädigten Wäldern zeigen gleichartige Effekte bei Nadelbäumen.

E

0168347

.P.a.t.e.n.t.a.n.s.p.r.ü.c.h.e

1. Grusförmiges Mittel zum Schutz von Pflanzen gegen gasförmiges Schwefeldioxid, dadurch gekennzeichnet, dass es

a) Schwefeldioxid in an mindestens ein staubförmiges Adsorbens gebundener und für die Pflanze unschädlicher Form,

b) mindestens einen Wirkstoff, der aus Zuckern, Zuckersäuren und deren Salzen sowie Zuckeralkoholen gewählt ist,

c) mindestens einen Kleber, der aus pflanzlichen Schleimen und Gummen gewählt ist, und

d) mindestens ein staubförmiges Adsorbens, das aus silikatischen Materialien gewählt ist,

enthält.

2. Mittel nach Anspruch 1, dadurch gekennzeichnet, dass es

a) 0,40  bis  0,47 Gew.%  Schwefeldioxid in gebundener Form,
b) 3,6   bis  5,0  Gew.%  Wirkstoff(e),
c) 27    bis 31    Gew.%  Kleber und
d) 12    bis 16    Gew.%  Adsorbens

enthält.

3. Mittel nach Anspruch 2, dadurch gekennzeichnet, dass es

a) 0,43 Gew.% Schwefeldioxid in gebundener Form,
b) 4,0 Gew.% Wirkstoff(e),
c) 28 Gew.% Kleber und
d) 14 Gew.% Adsorbens enthält.

4. Mittel nach einem der Ansprüche 1 bis 3, dadurch gekennzeichnet, dass es ausserdem 35 bis 40 Gew.% mindestens eines Lösungsvermittlers enthält.

5. Mittel nach Anspruch 4, dadurch gekennzeichnet, dass es ausserdem 38 Gew.% Lösungsvermittler enthält.

6. Mittel nach einem der Ansprüche 1 bis 5, dadurch gekennzeichnet, dass der Wirkstoff aus mindestens einer Verbindung besteht, die aus
D-Mannose,
D-Galactose,
L-Sorbose,
L-Arabinose,
D-Xylose,
Glucuronsäure und deren Salzen,
Galacturonsäure und deren Salzen,
D-Mannit und
Sorbit
gewählt ist.

7. Mittel nach Anspruch 6, dadurch gekennzeichnet, dass der Wirkstoff aus mindestens einer Verbindung besteht, die aus D-Galactose, D-Xylose und D-Mannit gewählt ist.

8. Mittel nach einem der Ansprüche 1 bis 7, dadurch gekennzeichnet, dass der Kleber aus Gummiarabikum, Pektin, Tragant und Alginen gewählt ist.

9. Mittel nach Anspruch 8, dadurch gekennzeichnet, dass der Kleber aus einem alkalischen Extrakt aus Laminaria digitata und Ascophyllum nodosum besteht, der ca. 70 Gew.% Algine, bezogen auf die Trockensubstanz, enthält.

10. Mittel nach einem der Ansprüche 1 bis 9, dadurch gekennzeichnet, dass das Adsorbens aus Talkum, Diabasmehl oder Phonolithmehl besteht.

11. Mittel nach Anspruch 10, dadurch gekennzeichnet, dass das Adsorbens aus Talkum besteht.

12. Mittel nach einem der Ansprüche 5 bis 11, dadurch gekennzeichnet, dass der Lösungsvermittler aus Bittersalz besteht.

E

# EUROPÄISCHER RECHERCHENBERICHT

**0168347**

Nummer der Anmeldung

EP 85 81 0284

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | FR-A-1 567 294 (NEHEZVEGYIPARI KUTATO INTEZET) <br> * Beispiele; Ansprüche * <br><br> ----- | 1-5,10 -12 | A 01 N 59/02 // <br> (A 01 N 59/02 <br> A 01 N 43:16 <br> A 01 N 35:02 <br> A 01 N 31:02 ) |

### RECHERCHIERTE SACHGEBIETE (Int. Cl.4)

A 01 N

Der vorliegende Recherchenbericht wurde für alle Patentansprüche erstellt.

| Recherchenort | Abschlußdatum der Recherche | Prüfer |
|---|---|---|
| DEN HAAG | 07-10-1985 | FLETCHER A. S. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82